# FASCICULE DE BREVET EUROPEEN

(11) **EP 3 248 507 B1**
(45) Date de publication et mention de la délivrance du brevet: **27.03.2019**
(21) Numéro de dépôt: 17172242.4
(22) Date de dépôt: 22.05.2017
(51) Int. Cl.: A47B 96/14, F16B 12/02, A47B 47/02, A47B 87/02

(54) **ELEMENT DE LIAISON ET KIT DE MONTAGE DE MEUBLE**
VERBINDUNGSELEMENT UND MONTAGEKIT FÜR MÖBEL
CONNECTION ELEMENT AND ASSEMBLY KIT FUR FURNITURE

(30) Priorité: 24.05.2016 BE 201605380
(43) Date de publication de la demande: 29.11.2017
(73) Titulaire: Renard, Olivier, 1170 Watermael-Boitsfort (BE)
(72) Inventeur: Renard, Olivier, 1170 Watermael-Boitsfort (BE)
(74) Mandataire: Pecher, Nicolas

(56) Documents cités:
- EP-A1- 1 201 158
- DE-A1-102008 006 439
- DE-U1- 20 120 498
- NL-A- 7 508 149

## Description

### Domaine technique

L'invention se rapporte à un kit d'assemblage de meuble et à une méthode d'assemblage dudit kit. En particulier, l'invention se rapporte à un élément de liaison.

### État de la technique

On connaît de nombreux types de montants solides pour le montage de mobiliers tels que des armoires ou des tables. Ces montants sont parfois associés à des panneaux, éventuellement rigides, qui permettent de réaliser les parois du meuble. Les montants peuvent également être associés à des éléments de liaison. Ces éléments de liaison sont généralement attachés à un panneau et servent à introduire et maintenir le panneau dans le montant. Ils peuvent également être mobile dans le montant pour former une charnière, l'ensemble du panneau et de l'élément de liaison formant ainsi un porte d'un meuble.

Par exemple, la demande de brevet US5690239 décrit un montant avec un évidement. Cet évidement comprend une portion centrale rectangulaire et des bras qui s'étendent normalement depuis la portion centrale. Ce montant est associé à des éléments de liaison qui permettent l'introduction d'un panneau. Un premier élément de liaison permet d'introduire le panneau de manière fixe. Un second élément permet d'introduire le panneau de manière mobile, le panneau pouvant effectuer une rotation de maximum 60°. Un tel montant ne permet donc pas l'introduction d'un panneau sans élément de liaison, ce qui entraîne des coûts supplémentaires. Le temps d'assemblage est également plus long. Un tel montant ne permet pas non plus de réaliser des portes de meuble car une rotation de maximum 60° est insuffisante pour pouvoir ouvrir correctement la porte.

Le modèle d'utilité DE29519642 U décrit un montant avec un évidement en forme de T. Ce montant permet l'introduction directe et fixe d'un panneau. Le bord du panneau qui est introduit dans le montant doit par contre être découpé selon une forme complémentaire à l'évidement, ce qui est coûteux en temps, matière et énergie. De plus, ce montant ne permet pas l'utilisation d'un élément de liaison et ne permet pas de créer une charnière.

La demande de brevet EP 1 201 158 décrit un meuble de rangement, notamment pour bureaux. Ce document décrit un montant 2A, permettant, en combinaison avec un second montant identique 2B, de réaliser un angle entre deux panneaux 72 et 74 d'un meuble. Moyennant l'utilisation d'un raccord 44, 46 présentant un axe 70, les deux panneaux peuvent être orientés l'un par rapport à l'autre sous divers angles. Cependant, ce mécanisme n'est pas prévu et ne convient pas pour réaliser une charnière. En particulier, les rainures semi-circulaires de l'encoche 16 ne permettent pas de réaliser une charnière.

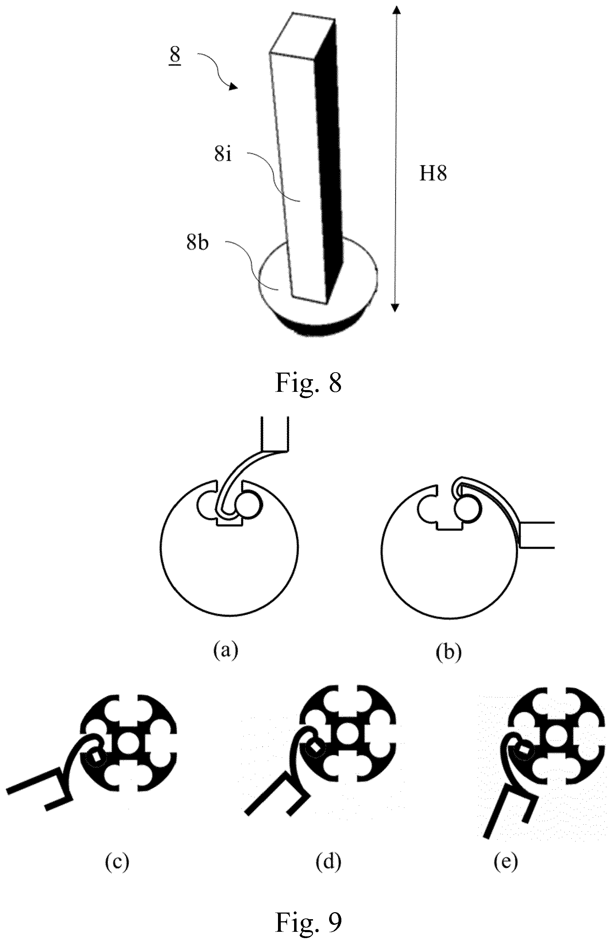

La demande de brevet DE 10 2008 006 439 décrit un ensemble comprenant un profil de construction, des bras de support et des éléments de liaison. Comme représenté à la figure 9, un bras de liaison 26 peut être agencé de manière fixe dans une rainure 1 d'un profil 2, et, en collaboration avec second bras de liaison 26 et un axe32, constituer une charnière. Cependant, il n'est pas prévu que le bras de liaison 26 puisse être agencé en rotation par rapport au profil 2. La constitution d'une charnière nécessite donc plusieurs pièces et un montage délicat.

En conclusion, il existe un besoin pour des kits d'assemblage de meubles permettant l'utilisation d'un élément de liaison afin de réaliser une charnière.

### Résumé de l'invention

Selon un premier aspect, la présente invention se rapporte à un kit d'assemblage de meuble.

Dans l'invention, on peut utiliser un montant solide pour un kit de montage de meuble. Le montant présente :
- une longueur mesurée parallèlement à un axe central entre une première extrémité et une seconde extrémité ;
- une section normale à l'axe central.
La section présente au moins un bord externe comprenant un évidement dirigé vers l'axe central. Cet évidement comprend un premier coté, un second coté et un côté central normal au premier côté et au second côté. Les premier et second côtés s'étendent depuis le bord externe vers le côté central normal et sont au moins séparés l'un de l'autre par une distance minimale. Ils comprennent chacun :
a) une même cavité constituée d'une portion d'arc de cercle de plus de 180° ;
b) une première et une seconde portions rectilignes et parallèles l'une à l'autre, la première portion étant adjacente au bord externe et la seconde portion étant adjacente au côté central. Cette première portion et cette seconde portion sont reliées l'une à l'autre par la cavité.
Les premières portions du premier côté et du second côté sont séparées d'une distance au moins égale à la distance minimale. Les secondes portions du premier côté et du second côté sont séparées d'une distance égale à la distance minimale.
Le montant est aussi adapté pour recevoir un panneau présentant une largeur au plus égale à la longueur du montant solide, et une épaisseur mesurée normalement à la largeur et inférieure à la distance minimale entre les premier et second côtés du montant solide.

De préférence, la première et la seconde portions rectilignes et parallèles l'une par rapport à l'autre sont séparées d'une distance mesurée parallèlement au côté central inférieure ou égale à 0.8 mm, de manière encore plus préférée inférieure ou égale à 0.4 mm, idéalement égale à 0 mm.

Le bord externe de la section du montant solide a une forme générale choisie parmi les formes suivantes : un polygone régulier à N > 4 faces, un rectangle, un carré, de préférence, un cercle.

De préférence, le bord externe de la section du montant solide a une forme générale de cercle de rayon R et centré sur l'axe central, Z, et dans lequel les portions du bord externe adjacentes à l'évidement sont aplaties et inscrites dans le cercle de rayon R.

De préférence, le bord externe de la section du montant solide comprend au moins 2 évidements tel que décrit ci-dessus, placés de manière symétrique autour de l'axe central. De manière encore plus préférée, le bord externe comprend 4 évidements placés de manière symétrique autour de l'axe central.

La section normale à l'axe central du montant solide peut également présenter une ouverture circulaire coaxiale à l'axe central et de rayon inférieur à la distance entre l'axe central et le côté central de l'évidement. Cette ouverture forme ainsi un tube entre les première et seconde extrémités du montant solide.

De préférence, le tube présente une première et une seconde portions filetées, lesdites portions filetées s'étendant respectivement depuis les première et seconde extrémités sur une distance comprise entre 10 mm et 60 mm, de préférence entre 20 mm et 50 mm, de manière encore plus préférée 40 ± 5 mm.

L'invention se rapporte à un élément de liaison pour un kit de montage de meuble. Cet élément de liaison présente :
- une longueur mesurée parallèlement à un axe central ;
- une section perpendiculaire à l'axe central.
Cette section présente :
a) une portion circulaire de section complémentaire à une cavité d'un montant solide tel que décrit ci-dessus et adaptée pour être insérable dans une cavité dudit montant solide ;
b) une portion externe adaptée à s'étendre le long d'une portion du bord externe dudit montant solide ;
c) une portion courbe reliant la portion circulaire à la portion externe ;
d) une portion de fixation adaptée pour recevoir et attacher un panneau.
Cette disposition permet avantageusement l'insertion et la rotation de l'élément de liaison dans l'évidement du montant solide, pour constituer une charnière.

La portion de fixation de l'élément de liaison peut comprendre une première portion et une seconde portion parallèles l'une par rapport à l'autre et reliée l'une à l'autre par une portion normale à la première portion et à la seconde portion. Cette portion normale étant adjacente à la portion externe l'élément de liaison. La première portion présentant, de préférence, une encoche en forme de T dont l'ouverture est dirigée vers la seconde portion parallèle.

La portion circulaire de l'élément de liaison présente, de préférence, un évidement centré sur le centre du cercle de ladite portion, ledit évidement étant apte à recevoir un pointeau réalisé dans un matériau plus résistant que l'élément de liaison.

L'invention se rapporte aussi à un kit de montage de meuble. Ce kit comprend une pluralité de montants solides tels que décrit ci-dessus et une pluralité d'éléments de liaison tels que décrit ci-dessus.

De préférence, le kit comprend, en outre, au moins un panneau présentant une largeur égale à la longueur du montant solide, et une épaisseur mesurée normalement à la largeur et inférieure à la distance minimale entre les premier et second côtés du montant solide.

De préférence, le kit comprend également des profilés de garniture présentant une longueur mesurée parallèlement à l'axe central inférieure ou, de préférence, égale à la longueur du montant solide et une section normale à l'axe central, présentant une forme de T, lesdits profilés de garniture étant aptes à être insérés dans les cavités de l'évidement d'un montant solide.

Selon un deuxième aspect, l'invention se rapporte à une méthode d'assemblage d'un kit de montage de meuble. Cette méthode comprend les étapes suivantes :
a) mise à disposition d'un kit de montage de meuble tel que décrit ci-dessus ;
b) insertion optionnelle d'un pointeau dans l'évidement de l'élément de liaison ;
c) insertion de la portion circulaire d'un élément de liaison dans une des cavités de l'évidement d'un montant solide par une des extrémités du montant solide et parallèlement à l'axe central du montant solide ;
les étapes b et c pouvant être répétées.

De préférence, le kit comprend au moins un panneau et la méthode comprend au moins une des étapes supplémentaires suivantes :
a) fixation d'un panneau à la portion de fixation de l'élément de liaison ;
b) insertion d'un panneau dans l'évidement d'un montant solide par une des extrémités du montant solide et parallèlement à l'axe central du montant solide ;
les étapes pouvant être répétées.

De préférence, le kit comprend au moins un profilé de garniture et la méthode comprend l'étape supplémentaire suivante : insertion d'un profilé de garniture dans les cavités et l'évidement d'un montant solide par une des extrémités du montant solide et parallèlement à l'axe central du montant solide, l'étape pouvant être répétée.

### Brève description des dessins

Ces aspects ainsi que d'autres aspects de l'invention seront clarifiés dans la description détaillée de modes de réalisation particuliers de l'invention, référence étant faite aux dessins des figures, dans lesquelles :
- la Fig. 1(a) est une vue en perspective d'un exemple de montant solide pour un kit de montage de meuble selon l'invention ;
- la Fig. 1(b) montre la section du montant solide de la Fig. 1(a) pour un kit de montage de meuble selon l'invention ;
- la Fig. 2 montre l'évidement du montant solide de la Fig. 1(a) ;
- la Fig. 3 est un exemple de panneau ;
- la Fig. 4 illustre une utilisation de deux montants solides tel que montré à la de la Fig. 1(a) dans lesquels a été introduit un panneau ;
- la Fig. 5 illustre des modes de réalisation alternatifs du montant du kit de montage de meuble selon l'invention ;
- la Fig. 6 est une vue en perspective d'un exemple d'élément de liaison pour un kit de montage de meuble selon l'invention ;
- la Fig. 7 montre des sections de modes de réalisation d'éléments de liaison selon l'invention ;
- la Fig. 8 illustre une vue en perspective d'un mode de réalisation d'un pointeau;
- la Fig. 9 montre des sections de kits de montage de meuble comprenant un montant solide et un élément de liaison selon l'invention à différentes positions ;
- la Fig. 10(a) montre un exemple dans lequel le kit de montage de meuble est utilisé pour réaliser une paroi fixe droite ;
- la Fig. 10(b) montre un exemple dans lequel le kit de montage de meuble est utilisé pour réaliser une paroi fixe oblique ;
- la Fig. 11(a) illustre une section d'un profilé de garniture ;
- la Fig. 11(b) montre une section d'un profilé de garniture inséré dans un montant solide;
- la Fig. 12 montre un exemple schématique de kit d'assemblage de meuble partiellement assemblé ;
- la Fig. 13 montre une vue en coupe d'un crochet d'arrimage d'un montant solide pour un kit d'assemblage de meuble ;
- la Fig. 14 montre une vue agrandie d'une portion de la section d'un montant solide pour un kit de montage de meuble selon l'invention.
Les dessins des figures ne sont pas à l'échelle. Généralement, des éléments semblables sont dénotés par des références semblables dans les figures. La présence de numéros de référence aux dessins ne peut être considérée comme limitative, y compris lorsque ces numéros sont indiqués dans les revendications.

### Description détaillée de certains modes de réalisation de l'invention

Selon un premier aspect, l'invention se rapporte à un kit d'assemblage de meuble.

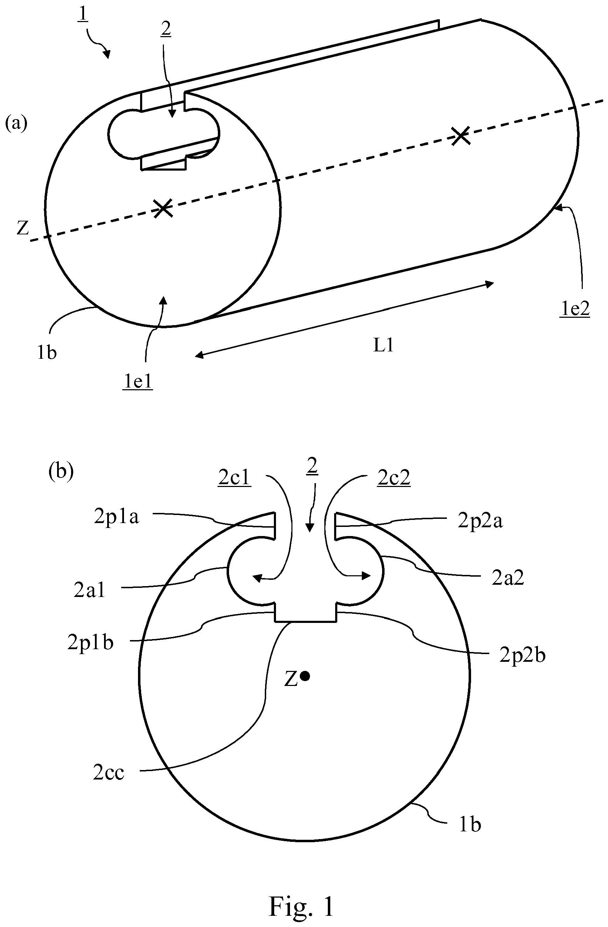

La Fig. 1(a) montre une vue en perspective d'un mode de réalisation de montant solide **1** pour un kit de montage de meuble selon l'invention. Le montant solide présente une longueur, **L1,** mesurée parallèlement à un axe central, **Z,** entre une première extrémité, **1e1,** et une seconde extrémité, **1e2.** La Fig. 1(b) illustre une section du montant solide normale à l'axe central. Cette section présente au moins un bord externe, **1b,** ce bord externe comprenant un évidement, **2,** dirigé vers l'axe central. Cet évidement comprend un premier coté, **2c1,** un second coté, **2c2,** et un côté central, **2cc,** normal au premier côté et au second côté. Les premier et second côtés s'étendent depuis le bord externe vers le côté central et sont au moins séparés l'un de l'autre par une distance minimale, **d2.** Les premier et second cotés comprennent chacun :
- une même cavité constituée d'une portion d'arc de cercle, **2a1, 2a2,** de plus de 180° ;
- une première, **2p1a, 2p2a,** et une seconde, **2p1b, 2p2b,** portions rectilignes et parallèles l'une à l'autre, la première portion étant adjacente au bord externe et la seconde portion étant adjacente au côté central 2cc. Les première et seconde portions sont reliées l'une à l'autre par la cavité.
Les premières portions du premier côté et du second côté sont, en outre, séparés d'une distance **d2b,** au moins égale à la distance minimale, les secondes portions du premier côté et du second côté étant séparées d'une distance égale à la distance minimale, **d2.** Le montant solide est adapté pour recevoir un panneau, **3,** présentant une largeur, **L3,** au plus égale à la longueur du montant solide, **L1,** et une épaisseur, **E3,** mesurée normalement à la largeur et inférieure à la distance minimale, **d2,** entre le premier côté et le second côté du montant solide.

Les montants solides pour des kits de montage de meuble connus dans l'art antérieur ne permettent généralement pas l'introduction directe d'un panneau sans élément de liaison. Les portions rectilignes, et parallèles du premier côté et du second côté de l'évidement du montant solide selon l'invention permettent de résoudre ce problème. En effet, ces portions offrent une surface suffisante pour que d'une part, un panneau inséré dans le montant solide soit maintenu correctement, et d'autre part, que la partie du panneau insérée dans l'évidement ne s'use pas prématurément. Il existe également des montants solides permettant l'introduction directe de panneau. Cependant, ces montants n'offrent aucun dégagement comme ceux offert par les cavités constituées d'une portion d'arc de cercle de l'évidement du montant solide selon l'invention. Ces évidements permettent le passage d'éléments utiles comme des câbles électriques, des crochets d'arrimage, un système de rappel ou d'assistance à la fermeture, ou encore un élément de liaison.

Le montant solide **1,** peut être réalisé en bois, en matière plastique, en métal, en béton, ou en matériau composite. Le bois peut être d'essences diverses comme par exemple du bouleau, du sapin, du chêne, du tek. Il peut aussi être aggloméré. Les métaux utilisés sont, par exemple, de l'acier, de l'aluminium, du cuivre. Les matériaux composites sont, par exemple, de la fibre de verre ou de carbone. De préférence, le montant solide est en aluminium extrudé. L'extrusion étant un procédé de fabrication connu de l'homme de métier, dans lequel un matériau compressé est contraint de traverser une buse de la section de la pièce à obtenir. On forme donc en continu le produit long qui sera ensuite découpé à la longueur voulue. Les cadences de production sont généralement élevées.

La longueur, **L1,** du montant solide est, par exemple, comprise entre 10 et 1500 mm, de préférence entre 20 et 1000 mm, de manière encore plus préférée entre 30 et 790 mm.

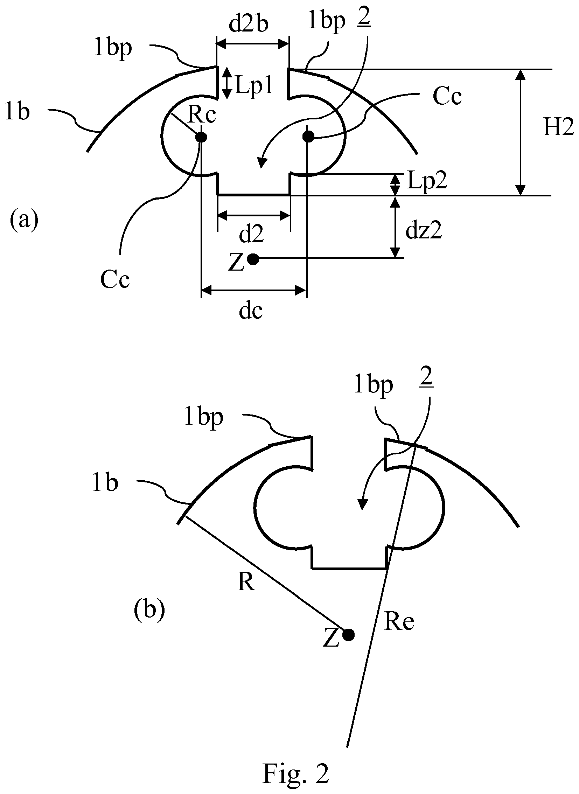

La Fig. 2(a) montre un exemple d'évidement, **2,** du montant solide. De préférence, l'évidement présente une symétrie par rapport à un axe de symétrie issu de l'axe central et normal au côté central. L'évidement possède une hauteur, **H2,** mesurée normalement depuis le côté central jusqu'au bord externe. Les premières et secondes portions rectilignes et parallèles l'une à l'autre des premier et second cotés ont chacune une longueur, **Lpi,** avec i = 1, 2 mesurée normalement par rapport au côté central, respectivement depuis le bord externe jusqu'à la cavité **(Lp1)** et depuis la cavité jusqu'au côté central **(Lp2).** Les longueurs **Lp1** et **Lp2** peuvent ou non être égales. De préférence, **Lp2** est légèrement inférieure à **Lp1.**

La distance, **dz2,** mesurée normalement au côté central, entre le côté central de l'évidement et l'axe central est strictement non-nulle.

Par exemple, la hauteur **H2** est comprise entre 8 et 25 mm, de préférence entre 9 et 15 mm, de manière encore plus préférée entre 10 et 11 mm. Par exemple, les longueurs des deux portions rectilignes, et parallèles l'une par rapport à l'autre **Lpi,** avec i = 1, 2, sont comprises entre 1 et 10 mm, de préférence entre 1 et 5 mm, de manière encore plus préférée entre 1,5 et 3 mm. Par exemple, la distance **dz2** est comprise entre 1 et 10 mm, de préférence entre 1 et 5 mm, de manière encore plus préférée entre 1,5 et 3 mm.

Chacune des cavités constituées d'une portion d'arc de cercle, **2a1, 2a2,** de plus de 180° de l'évidement a un rayon, **Rc** et un centre, **Cc.** Les centres des cavités étant séparés par une distance, **dc,** mesurée parallèlement au côté central. Les centres des cavités sont, en outre situés à une distance du côté central supérieure à la longueur, **Lp2,** des secondes portions rectilignes et parallèles l'une à l'autre des premiers et second cotés

Par exemple, le rayon **Rc,** est compris entre 2 et 10 mm, de préférence entre 2,5 et 5 mm, de manière encore plus préférée entre 3 et 4 mm. Par exemple, la distance, **dc,** entre les centres des cavités, **Cc,** est comprise entre 5 et 20 mm, de préférence entre 8 et 15 mm, de manière encore plus préférée entre 9 et 11 mm.

La distance minimale, **d2,** entre les premier et second côtés du montant solide, est mesurée normalement entre les secondes portions, **2p1b, 2p2b** rectilignes et parallèles l'une à l'autre du premier côté et du second de l'évidement. La distance, **d2b,** entre les premières portions, **2p1a, 2p2a** rectilignes et parallèles l'une à l'autre du premier côté et du second de l'évidement peut éventuellement être légèrement plus grande que la distance minimale **d2,** d2b ≥ d2. La différence de longueur entre d2 et d2b est comprise entre 0 et 0,8 mm, de préférence entre 0 et 0,4 mm, de manière encore plus préférée entre 0 et 0,3 mm. Cette légère différence permet une insertion plus aisée du panneau dans l'évidement. De préférence, la distance d2b est égale à la distance d2 de sorte que les première et seconde portions rectilignes et parallèles des premier et seconds côtés de l'évidement sont alignées et dans le prolongement l'une de l'autre. Par exemple, la distance minimale, **d2,** est comprise entre 3 et 10 mm, de préférence entre 4 et 8 mm, de manière encore plus préférée entre 6 et 7 mm.

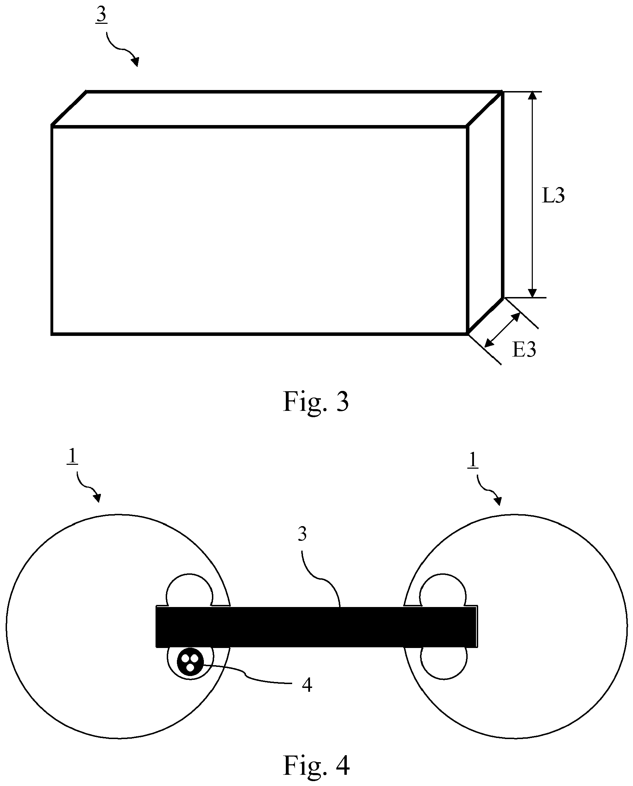

La Fig. 3 montre un exemple de panneau, **3.** De préférence, le panneau a une surface plane. Le panneau est, par exemple, un panneau en bois, métallique (aluminium, acier), en fibre composite (fibre de verre, de carbone, panneau de fibres à densité moyenne ou « médium density fiberboard », MDF), ou encore en verre. Le panneau à une épaisseur, **E3,** inférieure à la distance minimale **d2** entre les portions rectilignes et parallèles l'une par rapport à l'autre de l'évidement. Par exemple, pour une distance **d2** de 6,2 mm, le panneau a une épaisseur **E3** de 6 mm. Le panneau a également une largeur, **L3,** au plus égale à la longueur du montant solide **L1.**

La Fig. 4 montre un exemple d'utilisation de deux montants solides dans lesquels un panneau, **3,** a été introduit. L'ensemble forme ainsi, par exemple, une paroi d'un meuble. La Fig. 4 montre également une utilisation possible de l'espace dégagé par les cavités. Par exemple, un câble électrique, **4,** peut être placé dans une cavité. Ce câble peut, par exemple, alimenter un éclairage intérieur du meuble, ou encore alimenter une prise de courant. Un crochet d'arrimage peut également être placé dans la cavité. Ce crochet permet, par exemple, de fixer le meuble à un mur.

Un deuxième type de panneau, ci-après panneau tablette, **3b,** peut également être utilisé pour être posé sur un ou plusieurs montants solides de la même longueur pour former, par exemple, une tablette d'une armoire, ou encore pour former une table. Ces panneaux tablettes possèdent une épaisseur **E3b,** généralement plus grande que l'épaisseur d'un panneau, **3,** destiné aux parois de meuble, **E3.** De préférence, le panneau tablette est un panneau plan et comprend de préférence des trous s'étendant au travers de son épaisseur et permettant le passage de goujons, tiges filetées, boulon ou vis. Par exemple, une épaisseur de panneau tablette standard du commerce est de 18 mm. Dans ce cas, le montant solide aura une des longueurs du tableau suivant :

| | | | | | |
|---|---|---|---|---|---|
| Montant (mm) | 32 | 282 | 482 | 682 | 782 |
| Montant + panneau (mm) | 50 | 300 | 500 | 700 | 800 |

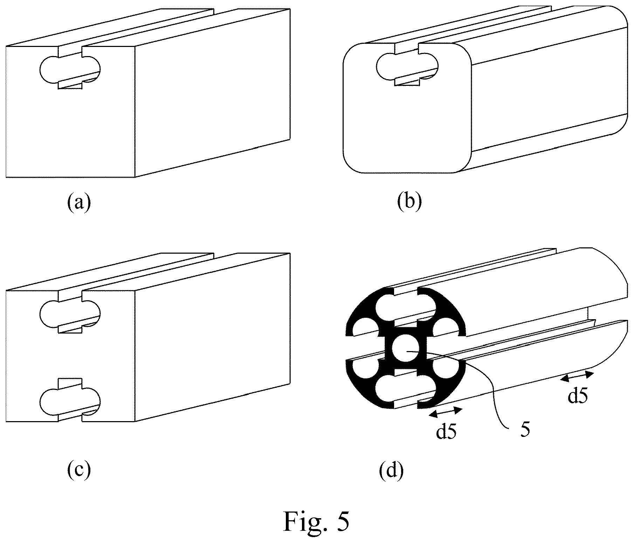

La Fig. 5 illustre des variantes du montant solide. Les Fig. 5(a) et 5(b) montre un montant solide dont le bord externe de la section a une forme générale carrée. La forme du bord externe de la section a une forme générale choisie parmi les formes suivantes : un polygone régulier à N > 4 faces, un rectangle, un carré, de préférence, un cercle. Par « forme générale », on entend la forme qu'aurait le bord externe en l'absence de l'évidement. De même, les éventuelles découpes aux arrêtes (cf. Fig. 5(b)) sont également ignorées pour déterminer la forme générale.

De préférence, le montant solide possède une pluralité d'évidements. De préférence, ces évidements sont identiques et sont placés de manière symétrique autour de l'axe central. La Fig. 5(c) montre un exemple avec deux évidements. De préférence, lorsque la forme générale du bord externe de la section du montant solide est un polygone régulier à N > 4 faces, un rectangle, ou un carré, la section du montant comporte autant d'évidement que de côtés et chaque côté comprend un évidement. De préférence, la forme générale du bord externe de la section du montant solide est un cercle et la section comprend 4 évidements symétriquement répartis autour de l'axe central (Fig. 5(d)).

De préférence, le bord externe, **1b,** de la section du montant solide est un cercle de rayon **R** centré sur l'axe central, **Z** et comprend des portions adjacentes à l'évidement, **1bp,** ayant un rayon **Re** supérieur au rayon du cercle du reste du bord externe, **R,** Re > R. Autrement dit, la courbure **1/R** de la forme générale du bord externe est supérieure à la courbure, **1/Re,** des portions adjacentes à l'évidement, 1/Re < 1/R (cf. Fig 2(b)). Les portions du bord externe adjacentes à l'évidement sont donc aplaties et inscrites dans le cercle de rayon **R.** Cette différence permet d'utiliser un élément de liaison (cf. ci-dessous) sans user prématurément les arêtes vives des bords de l'évidement du montant solide.

Dans le cas préféré, illustré à la Fig. 5(d), les quatre évidements sont identiques et distribués autour de l'axe central tous les 90°. De préférence, chacun des évidements présente une symétrie par rapport à un axe de symétrie issu de l'axe central et normal au côté central de chacun des évidements.

De préférence, la section du montant solide normale à l'axe central présente, en outre, une ouverture circulaire, **5,** coaxiale à l'axe central, **Z**, et de rayon inférieur à la distance, **dz2,** entre l'axe central et le côté central de l'évidement. Cette ouverture forme un tube entre les première et seconde extrémités du montant solide.

De préférence, le tube comprend une première et une seconde portions filetées, lesdites portions filetées s'étendant parallèlement à l'axe central et respectivement depuis les première et seconde extrémités sur une distance, **d5,** au plus égale à la moitié de la longueur du montant, **L1.** Par exemple, la distance, **d5,** est comprise entre 10 mm et 60 mm, de préférence entre 20 mm et 50 mm, de manière encore plus préférée 40 ± 5 mm.

Cette portion de tube filetée a, de préférence, un diamètre permettant l'utilisation de goujons, **5g.** De préférence, ces goujons ont une taille standard, par exemple, ce sont des goujons M8 X 1,25. De préférence, les goujons ont une longueur, Lg, permettant d'assembler deux montants solides l'un avec l'autre en vissant le goujon dans les portions de tube filetées respectives des deux montants solides.

De préférence, le goujon comprend deux portions filetées séparées par une portion non-filetée. De préférence, la portion non-filetée a une longueur au plus égale à l'épaisseur d'un panneau tablette, **E3b.** La première portion filetée du goujon peut être vissée dans un premier montant solide. Un panneau tablette préalablement foré au diamètre du goujon peut ensuite être inséré dans le goujon et, donc, posé sur une extrémité du premier montant solide. Enfin, un second montant solide peut être vissé à la deuxième portion filetée du goujon. Le panneau est ainsi fixé entre deux montants solides.

De préférence, une pluralité de goujons et de montants solides sont utilisés avec un panneau comprenant une pluralité de trous préalablement forés au diamètre des goujons. Cet ensemble permettant de réaliser les tablettes d'un meuble.

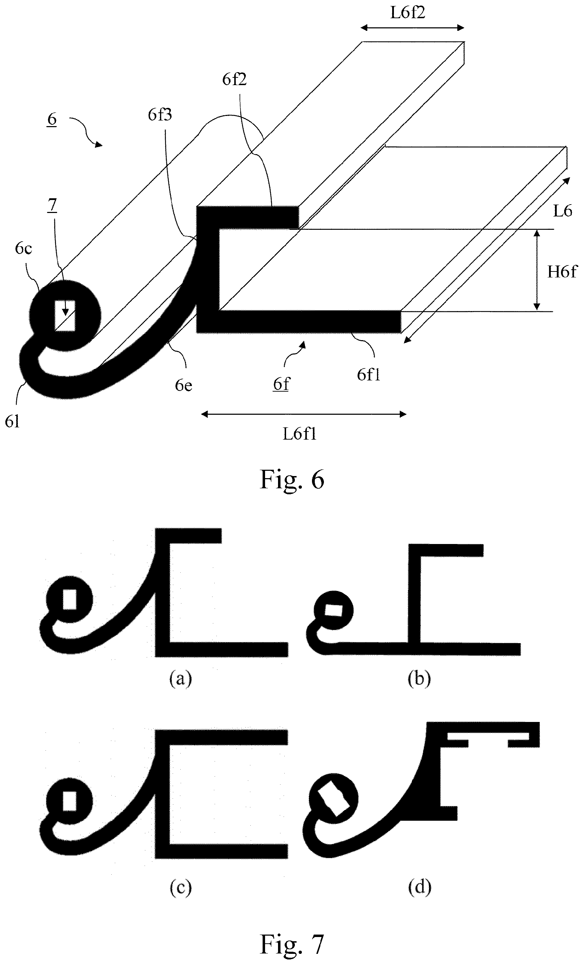

La Fig. 6 montre un exemple d'élément de liaison, **6,** pour un kit de montage de meuble. Cet élément de liaison présente une longueur, **L6,** mesurée parallèlement à un axe central et une section perpendiculaire à l'axe central. Cette section présente :
- une portion circulaire, **6c,** de section complémentaire à une cavité d'un montant solide tel que décrit ci-dessus, et adaptée pour être insérable dans une cavité dudit montant solide ;
- une portion externe, **6e,** adaptée à s'étendre le long d'une portion du bord externe dudit montant solide ;
- une portion courbe, **6l,** reliant la portion circulaire à la portion externe ;
- une portion de fixation, **6f,** adaptée pour recevoir et attacher un panneau.

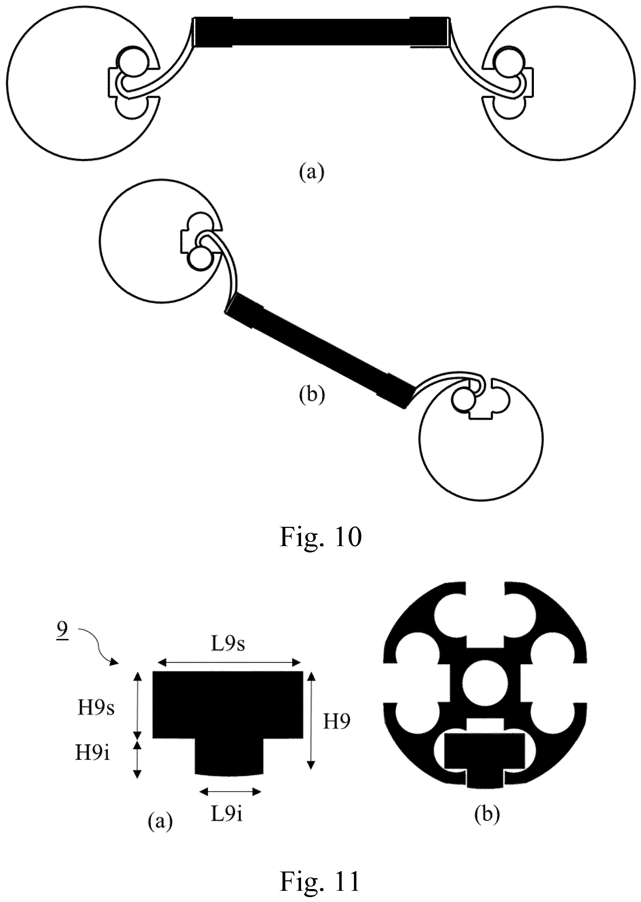

L'élément de liaison est destiné à être utilisé en connexion avec le montant solide tel que décrit ci-dessus. L'élément de liaison offre plusieurs avantages supplémentaires. Tout d'abord, contrairement aux éléments de liaison connus dans l'art antérieur, l'élément de liaison selon l'invention peut assurer deux rôles distincts. Premièrement, il peut être utilisé pour réaliser des parois de meuble fixe (dans ce cas, au moins deux montants solides et deux éléments de liaison sont utilisés, cf. Fig. 10). Contrairement à l'art antérieur, la paroi peut être orientée selon un angle allant de 0 à 95° grâce à l'élément de liaison. Compte tenu de la symétrie des cavités du montant solide, on peut donc orienter la paroi selon un angle allant de 0 à 180° (environ 90° par cavité). Un autre avantage réside dans le fait que l'élément de liaison ne remplit pas l'entièreté de l'évidement du montant solide. L'espace excédentaire peut toujours être utilisé pour le passage de câble électrique par exemple. Deuxièmement, l'élément de liaison selon l'invention peut être utilisé pour réaliser une charnière. Autrement dit, l'élément de liaison associé à un montant solide et un panneau forme une porte de meuble. Troisièmement, le montage de l'élément de liaison utilisé comme charnière est très simple, puisqu'il consiste en l'insertion de l'élément de liaison dans une cavité du montant solide. Les charnières habituellement utilisées dans l'art antérieur sont souvent plus complexes à installer et requièrent des techniques et outillages spéciaux, ce qui est plus coûteux en argent, temps et énergie.

L'axe central de l'élément de liaison selon l'invention est parallèle et, de préférence, confondu avec l'axe central **Z,** du montant solide. La longueur de l'élément de liaison, **L6,** est inférieure ou, de préférence, égale à la longueur du montant solide, **L1** ; L6 ≤ L1.

De préférence, l'élément de liaison est réalisé dans le même matériau que le montant solide. Alternativement, l'élément de liaison, peut être réaliser en bois, en matière plastique, en métal, en béton, en matériau composite. Le bois peut être d'essences diverses comme par exemple du bouleau, du sapin, du chêne, du tek. Il peut aussi être aggloméré. Les métaux utilisés sont, par exemple, de l'acier, de l'aluminium, du cuivre. Les matériaux composites sont, par exemple, de la fibre de verre ou de carbone. De préférence, le montant solide est en aluminium extrudé. L'extrusion étant un procédé de fabrication connu de l'homme de métier, dans lequel un matériau compressé est contraint de traverser une buse de la section de la pièce à obtenir. On forme donc en continu le produit long qui sera ensuite découpé à la longueur voulue. Les cadences de production sont généralement élevées.

La portion circulaire, **6c,** de la section de l'élément de liaison a une forme de cercle dont le rayon est au plus égal au rayon, **Rc,** des cavités de l'évidement du montant solide. De préférence, ce rayon est légèrement inférieur au rayon, **Rc,** des cavités de sorte que l'élément de liaison peut être inséré, par une des deux extrémités du montant solide, dans une cavité et parallèlement à l'axe central. Une fois inséré, l'élément de liaison peut pivoter selon un angle de maximum 95° ± 20°, de préférence 95° ± 10°, de manière encore plus préférée, 95° ± 5°. L'axe de rotation étant parallèle à l'axe central et passant par le centre d'une des cavités de l'évidement du montant solide.

La portion externe, **6e,** de la section de l'élément de liaison a une forme adaptée à s'étendre le long d'une portion du bord externe du montant solide. Par exemple, lorsque le montant solide à une forme générale circulaire telle que décrite ci-dessus, la portion externe de la section de l'élément de liaison à une forme d'arc de cercle de telle sorte que la portion externe de l'élément de liaison épouse le bord externe du montant solide (cf. Fig. 9(b)). La Fig. 7 illustre des exemples d'éléments de liaison. Par exemple, la Fig. 7(a) montre un élément de liaison compatible avec un montant solide dont le bord externe a une forme circulaire. La Fig. 7(b) montre un élément de liaison compatible avec un montant solide dont le bord externe a une forme carrée.

Les portion circulaire, **6c,** et externe, **6e,** de la section de l'élément de liaison sont reliée par une portion courbe, **61.** Cette portion circulaire permet l'insertion et la rotation éventuelle de l'élément de liaison dans l'évidement du montant solide.

La portion de fixation, **6f,** de la section de l'élément de liaison est adaptée pour recevoir et/ou attacher un panneau. La Fig. 6 montre un exemple de portion de fixation dans lequel la portion comprend une première portion et une seconde portion parallèles l'une par rapport à l'autre, **6f1** et **6f2,** et reliée l'une à l'autre par une portion normale, **6f3,** à ces deux portions. Cette portion normale étant adjacente à la portion externe, **6e.** De préférence, la portion normale à une hauteur, **H6f,** légèrement supérieure à l'épaisseur, **E3,** d'un panneau, H6f > E3, permettant ainsi l'insertion du panneau dans la portion de fixation. Les portions parallèles, **6f1** et **6f2,** ont une longueur, **L6f1, L6f2** qui peuvent ou non être égales (cf. Fig. 7(a) et (c)).

De préférence, le panneau est fixé à l'élément de liaison à l'aide de vis, boulon, colle, ou soudure. De préférence le panneau est vissé à l'élément de liaison.

Dans une version alternative préférée, illustrée à la Fig. 7(d), la première portion parallèle, **6f1**, de la portion de fixation, **6f,** de la section de l'élément de liaison comprend une encoche en forme de T dont l'ouverture est dirigée vers la seconde portion parallèle, **6f2**. Cette encoche en forme de T peut être utilisée, par exemple, avec un système de boulon et écrou. La tête du boulon est introduite dans l'encoche en forme de T, la tige filetée du boulon ressortant de l'encoche. Un panneau préalablement foré peut alors être fixé à l'élément de liaison à l'aide de l'écrou. De préférence, l'écrou est un écrou borgne. Cette version alternative de l'élément de liaison est préférée car elle peut être produite via extrusion sans nécessité d'opération supplémentaire en dehors de la coupe à la longueur voulue. Les versions illustrées aux Fig. 7(a) à (c) nécessitent quant à elles d'être percée pour permettre le vissage des panneaux.

De préférence, la portion circulaire, **6c,** de la section de l'élément de liaison présente un évidement, **7,** centré sur le centre du cercle de ladite portion. Cet évidement s'étend de préférence sur toute la longueur, **L6,** de l'élément de liaison. L'évidement peut avoir une forme circulaire, carrée, polygonale ou, de préférence rectangulaire, ou encore, de manière plus préférée, rectangulaire avec un cercle centré sur le centre du rectangle et de diamètre supérieur à la largeur du rectangle et inférieur à la longueur du rectangle (cf. Fig. 7(d)). L'évidement a une longueur maximale, définie comme la distance entre les deux points les plus éloignés de l'évidement, inférieure de 10 mm au rayon, **Rc,** des cavités de l'évidement du montant solide, de préférence inférieure de 5 mm, de manière encore plus préférée inférieur de 2,5 mm au rayon, **Rc.**

La Fig. 8 montre un exemple de pointeau, **8,** présentant une hauteur, **H8,** inférieure ou égale à la longueur de l'élément de liaison, **L6,** et comprenant une tige de section, **8i,** complémentaire à l'évidement de la portion circulaire de la section de l'élément de liaison. Ce pointeau comprend également une base, **8b.** La base du pointeau a, de préférence, une forme de cône tronqué, la base du cône étant adjacente à la tige. Alternativement, la base peut être une portion de cylindre. Le diamètre maximum de la base est inférieur ou égal au rayon de la portion circulaire de la section de l'élément de liaison. La tige du pointeau peut être insérée dans l'évidement de la potion circulaire de la section de l'élément de liaison. Le pointeau ainsi inséré, permet de surélever légèrement l'élément de liaison et évite l'usure prématurée dudit élément de liaison lorsque ce dernier est utilisé comme charnière en combinaison avec un montant solide.

De préférence, le pointeau est réalisé dans un matériau plus résistant que l'élément de liaison.

De préférence, l'évidement de l'élément de liaison est circulaire et peut comprendre une portion filetée. Le pointeau est, par exemple, une vis à tête plate qui peut être vissé dans l'évidement circulaire et, de préférence, dans la portion filetée de cet l'évidement circulaire.

La Fig. 9 illustre un exemple de kit de montage de meuble comprenant un montant solide tel que décrit ci-dessus et un élément de liaison telle que décrite ci-dessus. De préférence, le kit comprend une pluralité de montants solides et une pluralité d'éléments de liaison.

La Fig. 9 montre un exemple d'utilisation du kit de montage de meuble comprenant un montant solide tel que décrit ci-dessus et un élément de liaison telle que décrite ci-dessus dans lequel l'élément de liaison est utilisé comme charnière. La Fig. 9(a) montre la charnière en configuration fermée. La Fig. 9(b) montre la charnière en configuration ouverte. Les Fig. 9(c), (d), (e), montrent des configurations intermédiaires.

De préférence, le kit comprend en outre, au moins un panneau (cf. Fig. 10) présentant une largeur égale à la longueur du montant solide, et une épaisseur mesurée normalement à la largeur et inférieure à la distance minimale entre les premier et second côtés du montant solide. La Fig. 10(a) montre un exemple dans lequel le kit de montage de meuble est utilisé pour réaliser une paroi fixe droite. La Fig. 10(b) montre un exemple dans lequel le kit de montage de meuble est utilisé pour réaliser une paroi fixe oblique.

Optionnellement, le kit de montage de meuble comprend également des profilés de garnitures, **9.** Ces profilés de garnitures sont destinés à être insérées dans les évidements du montant solide dans lesquels il n'y a ni panneau, ni élément de liaison. Ils permettent, par exemple, d'éviter la présence d'arêtes vives qui pourraient être dangereuses.

La Fig. 11(a) montre un exemple de profilé de garniture, **9.** Ce dernier présente une longueur mesurée parallèlement à l'axe central inférieure ou, de préférence, égale à la longueur, **L1,** du montant solide. La section du profilé de garniture, normale à l'axe central, présente une forme de T, avec une hauteur **H9** égale à la somme des hauteurs de la partie supérieure du T, **H9s,** et de la partie inférieure du T, **H9i.** De préférence, la hauteur de la partie supérieure du T, **H9s,** est inférieure à 2 fois le rayon, **Rc,** de la cavité de l'évidement du montant solide, H9s < 2Rc. De préférence, la hauteur de la partie inférieure du T, **H9i,** est supérieure ou égale à la longueur des portion rectilignes, et parallèles comprises entre le bord externe et la cavité du montant solide, **Lp1,** H9i ≥ Lp1. La section du profilé de garniture présente une première longueur correspondant à la partie supérieure du T, **L9s,** supérieure ou égale à la distance entre les centres, **dc,** des cavités du montant solide, L9s ≥ dc. La section du profilé de garniture présente une seconde longueur correspondant à la partie inférieure du T, **L9i,** inférieure ou égale à la distance minimum entre les entre les portions rectilignes et parallèles l'une par rapport à l'autre de l'évidement du montant solide, **d2,** L9i < d2. De préférence, la partie inférieure du T présente une courbure égale à la courbure du bord externe du montant solide.

Le profilé de garniture peut être réalisé en bois, en matière plastique opaque ou translucide, en métal, en matériau composite. Le bois peut être d'essences diverses comme par exemple du bouleau, du sapin, du chêne, du tek. Il peut aussi être aggloméré. Les métaux utilisés sont, par exemple, de l'acier, de l'aluminium, du cuivre.

La Fig. 11(b) montre un exemple de profilé de garniture inséré dans un montant solide selon l'invention. De préférence, le profilé de garniture est inséré parallèlement à l'axe central, Z, dans un évidement par une des extrémités du montant solide. De préférence, la hauteur de la partie supérieure du T, **H9s,** est légèrement inférieure ou égale à l'ouverture des cavités de l'évidement du montant solide, de telle sorte que le profilé de garniture soit enserré dans les cavités de l'évidement du montant solide.

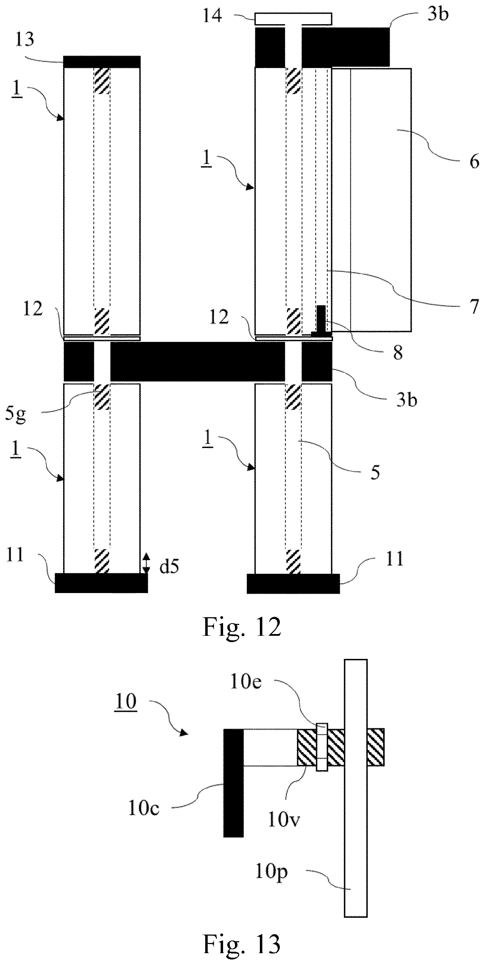

La Fig. 12 montre un exemple schématique de kit d'assemblage de meuble partiellement assemblé. Un kit de montage de meuble comprend, de préférence, les éléments suivants : une pluralité de montants solides, au moins un panneau tablette, optionnellement au moins un élément de liaison. De préférence, le kit comprend également au moins un des éléments suivants : goujons, vis, boulons, embouts pour pieds réglables ou fixes, rondelles, panneaux, glissières, profilés de garniture, poignées, loqueteaux, éléments de finition supérieure, crochet d'arrimage.

L'exemple illustratif de kit représenté à la Fig. 12 comprend 4 montants solides **1,** deux panneaux tablettes **3b,** deux goujons **5g,** deux embouts pour pieds **11,** un élément de liaison **6,** un pointeau **8,** deux rondelles **12,** deux éléments de finition supérieure **13, 14.**

Dans cet exemple, les embouts pour pieds comprennent une portion de tige filetée destinée à être vissée dans une portion filetée du tube central d'un montant solide et une base sur laquelle le meuble, une fois assemblé, sera posé. Cette base peut être d'un diamètre légèrement supérieur ou légèrement inférieur au diamètre du montant solide dans le cas d'un montant solide de section circulaire ou de sa plus longue diagonale, dans le cas d'un montant solide polygonal. Cette base peut être réalisée, par exemple, en matière plastique ou en caoutchouc. Ces embouts pour pieds peuvent être réglables en hauteur et sont bien connus de l'homme de métier et permettent d'éviter que le montant solide ne s'use prématurément ou qu'il n'use prématurément le sol sur lequel il est posé.

Les éléments de finition supérieure permettent de couvrir une extrémité du montant solide pour éviter que des poussières ou objets ne tombent à l'intérieur de ce dernier. Ces éléments de finition supérieure comprennent une portion de tige filetée destinée à être vissée dans une portion filetée du tube central d'un montant solide et une partie supérieure. Cette partie supérieure peut être réalisée dans le même matériau que le tube ou encore en bois, en matière plastique opaque ou translucide, en métal, en matériau composite. Le bois peut être d'essences diverses comme par exemple du bouleau, du sapin, du chêne, du tek. Il peut aussi être aggloméré. Les métaux utilisés sont, par exemple, de l'acier, de l'aluminium, du cuivre. La portion de tige filetée et la partie supérieure peuvent éventuellement être séparée par un portion de tige lisse d'une longueur égale à l'épaisseur d'un panneau tablette **E3b** (cf. élément **14** de la Fig. 12), ce qui permet de former une tablette supérieure au meuble ou, alternativement une table.

De préférence, pour éviter de percer le panneau tablette visible du haut d'un meuble ou d'une table, on utilisera des goujons de type « double-end » non traversant dont la longueur du filet supérieur est inférieure à l'épaisseur du dernier panneau tablette.

De même, des éléments de finition (capuchon) peuvent être prévus pour l'élément de liaison. Ces éléments de finition sont insérés à une extrémité de l'élément de liaison. De préférence, l'élément de liaison est un élément tel qu'illustré à la Fig. 7(d) et l'élément de finition se glisse dans l'encoche en forme de T.

Les rondelles peuvent être placée entre un panneau tablette et un montant solide. Ces rondelles sont de préférences de la même forme que la section du montant solide et comprennent un axe central. De préférence, la rondelle est fabriquée en matériau transparent. Un trou coaxial à l'axe central et d'un diamètre égale ou très légèrement supérieur au diamètre d'un goujon est percé dans la rondelle. La rondelle est utilisée lors de l'assemblage de deux montants solides séparés par un panneaux tablettes à l'aide d'un goujon. Le goujon est vissé dans une portion filetée du tube central du premier montant solide. Ensuite, le panneau tablette, préalablement percé, est posé sur le premier montant solide (le trou percé étant coaxial au tube du montant solide) de sorte que le goujon la traverse, puis la rondelle est posée sur le panneau tablette de sorte que le goujon la traverse également. Enfin, la portion filetée du tube central du second montant solide est vissée au goujon. La rondelle permet un serrage plus aisé du second montant solide et évite une usure prématurée du panneau tablette. De préférence, la rondelle à une épaisseur négligeable.

La Fig. 12 montre également l'utilisation d'un élément de liaison muni d'un pointeau. De préférence, le pointeau surélève légèrement l'élément de liaison et est posé sur une rondelle. Ceci permet à l'élément de liaison de pivoter en réduisant les frottements et donc l'usure prématurée de l'élément de liaison et du panneau tablette. La rondelle sert alors de crapaudine.

Alternativement, le pointeau est posé sur un support en métal (crapaudine) plus dur que le matériau du montant solide. Ce support a, de préférence, une forme générale rectangulaire dont les deux côtés les plus courts ont une forme d'arc de cercle d'un rayon égal au rayon de la partie circulaire de la portion circulaire de l'élément de liaison. Ce support à une longueur au comprise entre la distance, **dc,** entre les centres des cavités du montant solide et dc + 2 Rc, où **Rc** est le rayon des cavités de l'évidement du montant solide. Le support à une épaisseur comprise entre 0,5 et 3 mm, de préférence entre 1 et 2,5 mm. Ce support est inséré avec sa longueur parallèle au côté central de l'évidement du montant solide de sorte que le pointeau repose sur le support. De préférence, le support est utilisé même sans pointeau dans le but de réduire l'usure du panneau et/ou du panneau tablette en surélevant l'élément de liaison.

La Fig. 13 montre un exemple de coupe d'un crochet d'arrimage pour un kit de montage de meuble selon l'invention. Un crochet d'arrimage, **10,** permet de fixer le meuble à un mur pour réduire le risque de basculement. Un tel crochet comprend un portion plane, **10p,** destinée à être insérée dans les cavités de l'évidement d'un montant solide. De préférence, cette portion plane à une largeur égale à la longueur correspondant à la partie supérieure du T d'un profilé de garniture, **L9s.** Cette portion plane comprend un percement fileté dans lequel une tige perpendiculaire à la portion plane, et comprenant une portion filetée, **10v,** peut être vissée. De préférence, un contre écrou, **10e,** permet de bloquer la tige. Enfin, une portion d'attache, **10c,** permet de fixer le crochet d'arrimage au mur. De préférence ce crochet est en métal.

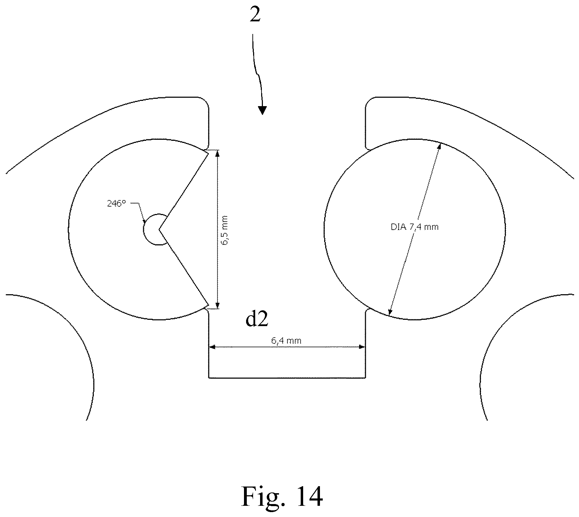

La Fig. 14 montre une vue agrandie d'une portion de la section d'un montant solide pour un kit de montage de meuble selon l'invention. Dans cet exemple, l'évidement **2** du montant solide présente une distance **d2** entre les premiers et second cotés de 6,4 mm. Les portions d'arc de cercle des deux cavités sont de 246°, et les cavités ont un diamètre de 7,4 mm. L'ouverture des cavités est de 6,5 mm. Il a été observé que ces dimensions permettaient aisément la constitution d'assemblages, y compris de charnières, et que la résistance de ces charnières était très bonne. Suivant les applications, ces dimensions pourront être adaptées et l'homme de métier pourra sans difficulté trouver des combinaisons de dimensions répondant à ses objectifs.

La méthode d'assemblage comprend les étapes suivantes :
a. mise à disposition d'un kit de montage de meuble comprenant une pluralité de montants solides selon l'invention tels que décrits ci-dessus et une pluralité d'éléments de liaison selon l'invention tels que décrits ci-dessus ;
b. étape optionnelle d'insertion d'un pointeau tel que décrit ci-dessus dans l'évidement de l'élément de liaison ;
c. insertion de la portion circulaire d'un élément de liaison dans une des cavités de l'évidement d'un montant solide par une des extrémités du montant solide et parallèlement à l'axe central du montant solide.
Les étapes b et c peuvent être répétées.

De préférence, la méthode comprend au moins une des étapes supplémentaires suivantes :
a. fixation d'un panneau à la portion de fixation de l'élément de liaison ;
b. insertion d'un panneau dans l'évidement d'un montant solide par une des extrémités du montant solide et parallèlement à l'axe central du montant solide.
Les étapes b et c peuvent être répétées.

Optionnellement, la méthode comprend l'étape supplémentaire suivante : insertion d'un profilé de garniture dans les cavités et l'évidement d'un montant solide par une des extrémités du montant solide et parallèlement à l'axe central du montant solide. Cette étape peut être répétée.

En résumé, l'invention peut également être décrite comme suit. Kit de montage de meuble comprenant une pluralité d'éléments de liaison et une pluralité de montants solides présentant une longueur mesurée et une section normale. Ladite section présentant un bord externe comprenant un évidement adapté pour recevoir un panneau muni ou non d'un élément de liaison, ledit élément de liaison pouvant servir de charnière.

| # Réf. | Élément |
|---|---|
| 1 | Montant solide |
| 2 | Évidement du montant solide |
| 3 | Panneau |
| 3b | Panneau tablette |
| 4 | Câble électrique |
| 5 | Ouverture circulaire |
| 5g | Goujon |
| 6 | Élément de liaison |
| 7 | Évidement de la portion circulaire de l'élément de liaison |
| 8 | Pointeau |
| 9 | Profilé de garniture |
| 10 | Crochet d'arrimage |
| 11 | Embout pour pieds |
| 12 | Rondelle |
| 13 | Élément de finition supérieure |
| 14 | Élément de finition supérieure |
| 1b | Bord externe du montant solide |
| 1bp | Portion du bord externe adjacente à l'évidement |
| 1e1 | Première extrémité du montant solide |
| 1e2 | Seconde extrémité du montant solide |
| 2a1 | Portion d'arc de cercle du premier côté |
| 2a2 | Portion d'arc de cercle du second côté |
| 2c1 | Premier côté de l'évidement |
| 2c2 | Second côté de l'évidement |
| 2cc | Côté central de l'évidement |
| 2p1a | Première portion rectiligne du premier côté |
| 2p1b | Seconde portion rectiligne du premier côté |
| 2p2a | Première portion rectiligne du second côté |
| 2p2b | Seconde portion rectiligne du second côté |
| 6c | Portion circulaire de l'élément de liaison |
| 6e | Portion externe de l'élément de liaison |
| 6f | Portion de fixation de l'élément de liaison |
| 6f1 | Première portion parallèle de la portion de fixation |
| 6f2 | Seconde portion parallèle de la portion de fixation |
| 6f3 | Portion normale de la portion de fixation |
| 6l | Portion courbe de l'élément de liaison |
| 8b | Base du pointeau |
| 8i | Tige du pointeau |
| 10c | Portion d'attache du crochet |
| 10e | Contre écrou du crochet |
| 10p | Portion plane du crochet |
| 10v | Portion filetée du crochet |
| Cc | Centre des cavités |
| d2 | Distance minimale entre premier et second côtés |
| d2b | Distance entre les secondes portions des premier et second côtés |
| d5 | Distance portion filetée |
| dc | Distance entre les centres des cavités |
| dz2 | Distance entre le côté central et l'axe central |
| E3 | Épaisseur du panneau |
| E3b | Épaisseur du panneau tablette |
| H2 | Hauteur de l'évidement |
| H6f | Hauteur de la portion normale |
| H8 | Hauteur du pointeau |
| H9 | Hauteur du profilé de garniture |
| H9i | Hauteur de la partie inférieure du T |
| H9s | Hauteur de la partie supérieure du T |
| L1 | Longueur du montant solide |
| L3 | Longueur du panneau |
| L6 | Longueur de l'élément de liaison |
| L6f1 | Longueur de la première portion parallèle |
| L6f2 | Longueur de la seconde portion parallèle |
| L9i | Longueur de la partie inférieure du T |
| L9s | Longueur de la partie supérieure du T |
| Lg | Longueur du goujon |
| Lp1 | Longueur du premier côté de l'évidement |
| Lp2 | Longueur du second côté de l'évidement |
| R | Rayon du bord externe de l'évidement |
| Rc | Rayon des cavités |
| Re | Rayon de portions adjacentes à l'évidement |
| Z | Axe central |

## Revendications

1. Élément de liaison (6) pour un kit de montage de meuble présentant :
• une longueur (L6) mesurée parallèlement à un axe central (Z) ;
• une section perpendiculaire à l'axe central (Z) présentant :
a) une portion circulaire (6c) de section complémentaire à une cavité (2a1, 2a2) d'un montant solide (1) présentant :
une longueur (L1) mesurée parallèlement à un axe central (Z) entre une première extrémité (1e1) et une seconde extrémité (1e2) ;
• une section normale à l'axe central (Z) présentant au moins un bord externe (1b), ledit bord externe (1b) comprenant un évidement (2) dirigé vers l'axe central (Z), ledit évidement (2) comprenant un premier coté (2c1), un second coté (2c2) et un côté central (2cc) normal aux premier et second côtés (2c1, 2c2), les premier et second côtés (2c1, 2c2) s'étendant depuis le bord externe (1b) vers le côté central (2cc) normal et étant au moins séparés l'un de l'autre par une distance minimale (d2), et comprenant chacun :
a) une même cavité (2a1, 2a2) constituée d'une portion d'arc de cercle de plus de 180° ;
b) une première (2p1a, 2p2a) et une seconde (2p1b, 2p2b) portions rectilignes et parallèles l'une à l'autre, la première portion (2p1a, 2p2a) étant adjacente au bord externe (1b) et la seconde portion (2p1b, 2p2b) étant adjacente au côté central (2cc), les première et seconde portions (2pla, 2p2a, 2p1b, 2p2b) étant reliées l'une à l'autre par la cavité (2a1, 2a2) ;
les premières portions (2p1a, 2p2a) des premier et second côtés (2c1, 2c2) étant séparées d'une distance (d2b) au moins égale à la distance minimale (d2), les secondes portions (2p1b, 2p2b) des premier et second côtés (2c1, 2c2) étant séparées d'une distance égale à la distance minimale (d2) ;
ledit évidement (2) du montant solide (1) étant adapté pour recevoir un panneau (3) présentant une largeur (L3) au plus égale à la longueur du montant solide (1), et une épaisseur (E3) mesurée normalement à la largeur et inférieure à la distance minimale (d2) entre les premier et second côtés (2c1, 2c2) du montant solide (1) et la portion circulaire (6c) étant adaptée pour être insérable dans une cavité (2a1, 2a2) dudit montant solide (1), permettant la rotation de l'élément de liaison (6) dans l'évidement du montant solide (1) ;
b) une portion externe (6e) adaptée à s'étendre le long d'une portion du bord externe (1b) dudit montant solide (1) ;
c) une portion courbe (61) reliant la portion circulaire (6c) à la portion externe (6e) ;
d) une portion de fixation (6f) adaptée pour recevoir et attacher un panneau (3).

2. Élément de liaison (6) selon la revendication 1, dans lequel la portion de fixation de l'élément de liaison (6) comprend une première portion (6f1) et une seconde portion (6f2) parallèles l'une par rapport à l'autre et reliées l'une à l'autre par une portion normale (6f3) à la première portion et à la seconde portion (6f1, 6f2), ladite portion normale (6f3) étant adjacente à la portion externe (6e) de l'élément de liaison (6), la première portion (6f1) présentant, de préférence, une encoche en forme de T dont l'ouverture est dirigée vers la seconde portion (6f2) parallèle.

3. Élément de liaison (6) selon une quelconque des revendications 1 à 2, dans laquelle, la portion circulaire (6c) de l'élément de liaison (6) présente un évidement (7) centré sur le centre du cercle de ladite portion circulaire (6c), ledit évidement (7) étant apte à recevoir un pointeau (8) réalisé dans un matériau plus résistant que l'élément de liaison (6).

4. Kit de montage de meuble comprenant une pluralité d'éléments de liaison (6) selon une quelconque des revendications 1 à 3 et une pluralité de montants solides (1) présentant :
• une longueur (L1) mesurée parallèlement à un axe central (Z) entre une première extrémité (1e1) et une seconde extrémité (1e2) ;
• une section normale à l'axe central (Z) présentant au moins un bord externe (1b), ledit bord externe (1b) comprenant un évidement (2) dirigé vers l'axe central (Z), ledit évidement (2) comprenant un premier coté (2c1), un second coté (2c2) et un côté central (2cc) normal aux premier et second côtés (2c1, 2c2), les premier et second côtés (2c1, 2c2) s'étendant depuis le bord externe (1b) vers le côté central (2cc) normal et étant au moins séparés l'un de l'autre par une distance minimale (d2), et comprenant chacun :
a) une même cavité (2a1, 2a2) constituée d'une portion d'arc de cercle de plus de 180° ;
b) une première (2p1a, 2p2a) et une seconde (2p1b, 2p2b) portions rectilignes et parallèles l'une à l'autre, la première portion (2p1a, 2p2a) étant adjacente au bord externe (1b) et la seconde portion (2p1b, 2p2b) étant adjacente au côté central (2cc), les première et seconde portions (2p1a, 2p2a, 2p1b, 2p2b) étant reliées l'une à l'autre par la cavité (2a1, 2a2) ;
les premières portions (2p1a, 2p2a) des premier et second côtés (2c1, 2c2) étant séparées d'une distance (d2b) au moins égale à la distance minimale (d2), les secondes portions (2p1b, 2p2b) des premier et second côtés (2c1, 2c2) étant séparées d'une distance égale à la distance minimale (d2) ;
ledit évidement (2) dudit montant (1) étant adapté pour recevoir un panneau (3) présentant une largeur (L3) au plus égale à la longueur du montant solide (1), et une épaisseur (E3) mesurée normalement à la largeur et inférieure à la distance minimale (d2) entre les premier et second côtés (2c1, 2c2) du montant solide (1).

5. Kit selon la revendication 4, comprenant en outre, au moins un panneau (3) présentant une largeur égale à la longueur du montant solide (1), et une épaisseur mesurée normalement à la largeur et inférieure à la distance minimale (d2) entre les premier et second côtés (2c1, 2c2) du montant solide (1).

6. Kit selon une quelconque des revendications 4 à 5, le kit comprenant en outre, des profilés de garniture (9) présentant une longueur mesurée parallèlement à l'axe central (Z) inférieure ou, de préférence, égale à la longueur du montant solide (1) et une section normale à l'axe central (Z), présentant une forme de T, lesdits profilés de garniture (9) étant aptes à être insérés dans les cavités (2a1, 2a2) de l'évidement (2) d'un montant solide (1).

7. Méthode d'assemblage d'un kit de montage de meuble comprenant les étapes suivantes :
a. mise à disposition d'un kit de montage de meuble selon la revendication 4 ;
b. insertion optionnelle d'un pointeau (8) dans l'évidement (2) de l'élément de liaison (6) selon la revendication 3 ;
c. insertion de la portion circulaire (6c) d'un élément de liaison (6) dans une des cavités (2a1, 2a2) de l'évidement (2) d'un montant solide (1) par une des extrémités du montant solide (1) et parallèlement à l'axe central (Z) du montant solide (1) ;
les étapes b et c pouvant être répétées.

8. Méthode d'assemblage selon la revendication 7, dans laquelle le kit de montage de meuble est un kit selon la revendication 5 et comprenant au moins une des étapes supplémentaires suivantes :
a. fixation d'un panneau (3) à la portion de fixation de l'élément de liaison (6) ;
b. insertion d'un panneau (3) dans l'évidement (2) d'un montant solide (1) par une des extrémités du montant solide (1) et parallèlement à l'axe central (Z) du montant solide (1) ;
les étapes pouvant être répétées.

9. Méthode d'assemblage selon une quelconque des revendications 7 à 8, dans laquelle le kit de montage de meuble est un kit selon la revendication 6 et comprenant l'étape supplémentaire suivante : insertion d'un profilé de garniture dans les cavités (2a1, 2a2) et l'évidement (2) d'un montant solide (1) par une des extrémités du montant solide (1) et parallèlement à l'axe central du montant solide (1) ; l'étape pouvant être répétée.

## Patentansprüche

1. Verbindungselement (6) für ein Montagekit für Möbel, mit:
einer Länge (L6), die parallel zu einer Mittelachse (Z) gemessen wird;
einem zur Mittelachse (Z) senkrechten Abschnitt mit:
a) einem kreisförmigen Bereich (6c) des Abschnitts, der zu einem Hohlraum (2a1, 2a2) eines festen Pfostens (1) Komplementär ist, mit:
einer Länge (L1), die parallel zu einer Mittelachse (Z) zwischen einem ersten Ende (1e1) und einem zweiten Ende (1e2) gemessen wird;
einem zur Mittelachse (Z) normalen Abschnitt, mit mindestens einer Außenkante (1b), wobei die Außenkante (1b) eine zur Mittelachse (Z) ausgerichtete Aussparung (2) umfasst, wobei die Aussparung (2) eine erste Seite (2c1), eine zweite Seite (2c2) und eine mittige Seite (2cc), die zur ersten und zweiten Seite (2c1, 2c2) normal ist, umfasst, wobei die erste und zweite Seite (2c1, 2c2) ab der Außenkante (1b) zur normalen mittigen Seite (2cc) verlaufen und mindestens durch einen Mindestabstand (d2) voneinander getrennt sind, und jeweils umfassen:
a) einen selben Hohlraum (2a1, 2a2), der aus einem Abschnitt eines Kreisbogens von mehr als 180° gebildet wird;
b) einen ersten (2p1a, 2p2a) und einen zweiten (2p1b, 2p2b) Bereich, die gerade und parallel zueinander sind, wobei der erste Bereich (2p1a, 2p2a) an die Außenkante (1b) grenzt und der zweite Bereich (2p1b, 2p2b) an die mittige Seite (2cc) grenzt, wobei der erste und zweite Bereich (2p1a, 2p2a, 2p1b, 2p2b) durch den Hohlraum (2a1, 2a2) miteinander verbunden sind; wobei die ersten Bereiche (2p1a, 2p2a) der ersten und zweiten Seite (2c1, 2c2) durch einen Abstand (d2b) voneinander getrennt sind, der mindestens so groß ist wie der Mindestabstand (d2), und die zweiten Bereiche (2p1b, 2p2b) der ersten und zweiten Seite (2c1, 2c2) durch einen Abstand voneinander getrennt sind, der so groß ist wie der Mindestabstand (d2); wobei die Aussparung (2) des festen Pfostens (1) zur Aufnahme einer Platte (3) angepasst ist, die eine Breite (L3), die höchstens der Länge des festen Pfostens (1) entspricht, und eine Stärke (E3), die normal zur Breite gemessen wird und kleiner ist als der Mindestabstand (d2) zwischen der ersten und der zweiten Seite (2c1, 2c2) des festen Pfostens (1), aufweist wobei der kreisförmige Bereich (6c) so angepasst ist, dass er in einen Hohlraum (2a1, 2a2) des festen Pfostens (1) eingesetzt werden kann, wodurch die Drehung des Verbindungselements (6) in der Aussparung des festen Pfostens (1) gestattet wird;
b) einem Außenbereich (6e), der so angepasst ist, dass er entlang eines Bereichs der Außenkante (1b) des festen Pfostens (1) verläuft;
c) einem gebogenen Bereich (61), der den kreisförmigen Bereich (6c) mit dem Außenbereich (6e) verbindet;
d) einem Befestigungsbereich (6f), der zur Aufnahme und Befestigung einer Platte (3) angepasst ist.

2. Verbindungselement (6) nach Anspruch 1, wobei der Befestigungsbereich des Verbindungselements (6) einen ersten Bereich (6f1) und einen zweiten Bereich (6f2) umfasst, die zueinander parallel und durch einen zum ersten und zweiten Bereich (6f1, 6f2) normalen Bereich (6f3) miteinander verbunden sind, wobei der normale Bereich (6f3) an den Außenbereich (6e) des Verbindungselements (6) angrenzt, wobei der erste Bereich (6f1) vorzugsweise eine T-förmige Nut aufweist, deren Öffnung zum parallelen zweiten Bereich (6f2) ausgerichtet ist.

3. Verbindungselement (6) nach einem der Ansprüche 1 bis 2, wobei der kreisförmige Bereich (6c) des Verbindungselements (6) eine Aussparung (7) aufweist, die in der Mitte des Kreises des kreisförmigen Bereichs (6c) zentriert ist, wobei die Aussparung (7) einen Steckstift (8) aufnehmen kann, der aus einem Material hergestellt ist, das fester als das Verbindungselement (6) ist.

4. Montagekit für Möbel mit mehreren Verbindungselementen (6) nach einem der Ansprüche 1 bis 3 und mehreren festen Pfosten (1), mit:
einer Länge (L1), die parallel zu einer Mittelachse (Z) zwischen einem ersten Ende (1e1) und einem zweiten Ende (1e2) gemessen wird;
einem zur Mittelachse (Z) normalen Abschnitt, mit mindestens einer Außenkante (1b), wobei die Außenkante (1b) eine zur Mittelachse (Z) ausgerichtete Aussparung (2) umfasst, wobei die Aussparung (2) eine erste Seite (2c1), eine zweite Seite (2c2) und eine mittige Seite (2cc), die zur ersten und zweiten Seite (2c1, 2c2) normal ist, umfasst, wobei die erste und zweite Seite (2c1, 2c2) ab der Außenkante (1b) zur normalen mittigen Seite (2cc) verlaufen und mindestens durch einen Mindestabstand (d2) voneinander getrennt sind, und jeweils umfassen:
a) einen selben Hohlraum (2a1, 2a2), der aus einem Abschnitt eines Kreisbogens von mehr als 180° gebildet wird;
b) einen ersten (2p1a, 2p2a) und einen zweiten (2p1b, 2p2b) Bereich, die gerade und parallel zueinander sind, wobei der erste Bereich (2p1a, 2p2a) an die Außenkante (1b) grenzt und der zweite Bereich (2p1b, 2p2b) an die mittige Seite (2cc) grenzt, wobei der erste und zweite Bereich (2p1a, 2p2a, 2p1b, 2p2b) durch den Hohlraum (2a1, 2a2) miteinander verbunden sind; wobei die ersten Bereiche (2p1a, 2p2a) der ersten und zweiten Seite (2c1, 2c2) durch einen Abstand (d2b) voneinander getrennt sind, der mindestens so groß ist wie der Mindestabstand (d2), wobei die zweiten Bereiche (2p1b, 2p2b) der ersten und zweiten Seite (2c1, 2c2) durch einen Abstand voneinander getrennt sind, der so groß ist wie der Mindestabstand (d2); wobei die Aussparung (2) des Pfostens (1) zur Aufnahme einer Platte (3) angepasst ist, die eine Breite (L3), die höchstens der Länge des festen Pfostens (1) entspricht, und eine Stärke (E3), die normal zur Breite gemessen wird und kleiner ist als der Mindestabstand (d2) zwischen der ersten und der zweiten Seite (2c1, 2c2) des festen Pfostens (1), aufweist.

5. Kit nach Anspruch 4, weiterhin umfassend mindestens eine Platte (3), die eine Breite, die der Länge des festen Pfostens (1) entspricht, und eine Stärke, die normal zur Breite gemessen wird und kleiner ist als der Mindestabstand (d2) zwischen der ersten und der zweiten Seite (2c1, 2c2) des festen Pfostens (1), aufweist.

6. Kit nach einem der Ansprüche 4 bis 5, wobei das Kit weiterhin Beschlagprofile (9) umfasst, die eine parallel zur Mittelachse (Z) gemessene Länge, die weniger als die Länge des festen Pfostens (1) beträgt oder vorzugsweise dieser entspricht, und einen zur Mittelachse (Z) normalen Abschnitt in Form eines T aufweisen, wobei die Beschlagprofile (9) in die Hohlräume (2a1, 2a2) der Aussparung (2) eines festen Pfostens (1) eingesetzt werden können.

7. Verfahren zum Zusammenbau eines Montagekits für Möbel, umfassend die folgenden Schritte:
a) Bereitstellen eines Montagekits für Möbel nach Anspruch 4;
b) optionales Einsetzen eines Steckstifts (8) in die Aussparung (2) des Verbindungselements (6) nach Anspruch 3;
c) Einsetzen des kreisförmigen Bereichs (6c) eines Verbindungselements (6) in einen der Hohlräume (2a1, 2a2) der Aussparung (2) eines festen Pfostens (1) über eines der Enden des festen Pfostens (1) und parallel zur Mittelachse (Z) des festen Pfostens (1);
wobei die Schritte b und c wiederholt werden können.

8. Verfahren zum Zusammenbau nach Anspruch 7, wobei das Montagekit für Möbel ein Kit nach Anspruch 5 ist und mindestens einen der folgenden zusätzlichen Schritte umfasst:
a) Befestigen einer Platte (3) am Befestigungsbereich des Verbindungselements (6);
b) Einsetzen einer Platte (3) in die Aussparung (2) eines festen Pfostens (1) über eines der Enden des festen Pfostens (1) und parallel zur Mittelachse (Z) des festen Pfostens (1);
wobei die Schritte wiederholt werden können.

9. Verfahren zum Zusammenbau nach einem der Ansprüche 7 bis 8, wobei das Montagekit für Möbel ein Kit nach Anspruch 6 ist, und das den folgenden zusätzlichen Schritt umfasst: Einsetzen eines Beschlagprofils in die Hohlräume (2a1, 2a2) und die Aussparung (2) eines festen Pfostens (1) über eines der Enden des festen Pfostens (1) und parallel zur Mittelachse des festen Pfostens (1); wobei der Schritt wiederholt werden kann.

## Claims

1. Link element (6) for a cabinet mounting kit having:
• a length (L6) measured parallel to a central axis (Z);
• a section at right angles to the central axis (Z) having:
a) a circular portion (6c) of section complementing a cavity (2a1, 2a2) of a solid upright (1) having:
a length (L1) measured parallel to a central axis (Z) between a first end (1e1) and a second end (1e2); a section normal to the central axis (Z) having at least one outer edge (1b), said outer edge (1b) comprising a void (2) directed towards the central axis (Z), said void (2) comprising a first side (2c1), a second side (2c2) and a central side (2cc) normal to the first and second sides (2c1, 2c2), the first and second sides (2c1, 2c2) extending from the outer edge (1b) towards the normal central side (2cc) and being at least separated from one another by a minimum distance (d2), and each comprising:
a) one and the same cavity (2a1, 2a2) composed of a portion of circular arc of more than 180°;
b) a first (2p1a, 2p2a) and a second (2p1b, 2p2b) rectilinear portions parallel to one another, the first portion (2p1a, 2p2a) being adjacent to the outer edge (1b) and the second portion (2p1b, 2p2b) being adjacent to the central side (2cc), the first and second portions (2p1a, 2p2a, 2p1b, 2p2b) being linked to one another by the cavity (2a1, 2a2);
the first portions (2p1a, 2p2a) of the first and second sides (2c1, 2c2) being separated by a distance (d2b) at least equal to the minimum distance (d2), the second portions (2p1b, 2p2b) of the first and second sides (2c1, 2c2) being separated by a distance equal to the minimum distance (d2);
said void (2) of the solid upright (1) being adapted to receive a panel (3) having a width (L3) at most equal to the length of the solid upright (1), and a thickness (E3) measured normally to the width and less than the minimum distance (d2) between the first and second sides (2c1, 2c2) of the solid upright (1) and the circular portion (6c) being adapted to be insertable into a cavity (2a1, 2a2) of said solid upright (1), allowing the rotation of the link element (6) in the void of the solid upright (1) ;
b) an outer portion (6e) adapted to extend along a portion of the outer edge (1b) of said solid upright (1) ;
c) a curved portion (61) linking the circular portion (6c) to the outer portion (6e);
d) a fixing portion (6f) adapted to receive and attach a panel (3).

2. Link element (6) according to Claim 1, in which the fixing portion of the link element (6) comprises a first portion (6f1) and a second portion (6f2) parallel to one another and linked to one another by a portion (6f3) normal to the first portion and to the second portion (6f1, 6f2), said normal portion (6f3) being adjacent to the outer portion (6e) of the link element (6), the first portion (6f1) having, preferably, a T-shaped notch whose opening is directed towards the parallel second portion (6f2) .

3. Link element (6) according to either one of Claims 1 and 2, in which the circular portion (6c) of the link element (6) has a void (7) centred on the centre of the circle of said circular portion (6c), said void (7) being capable of receiving a punch (8) produced in a material stronger than the link element (6).

4. Cabinet mounting kit comprising a plurality of link elements (6) according to any one of Claims 1 to 3 and a plurality of solid uprights (1) having:
• a length (L1) measured parallel to a central axis (Z) between a first end (1e1) and a second end (1e2);
• a section normal to the central axis (Z) having at least one outer edge (1b), said outer edge (1b) comprising a void (2) directed towards the central axis (Z), said void (2) comprising a first side (2c1), a second side (2c2) and a central side (2cc) normal to the first and second sides (2c1, 2c2), the first and second sides (2c1, 2c2) extending from the outer edge (1b) towards the normal central side (2cc) and being at least separated from one another by a minimum distance (d2), and each comprising:
a) one and the same cavity (2a1, 2a2) composed of a portion of circular arc of more than 180°;
b) a first (2p1a, 2p2a) and a second (2p1b, 2p2b) rectilinear portions parallel to one another, the first portion (2p1a, 2p2a) being adjacent to the outer edge (1b) and the second portion (2p1b, 2p2b) being adjacent to the central side (2cc), the first and second portions (2p1a, 2p2a, 2p1b, 2p2b) being linked to one another by the cavity the cavity (2a1, 2a2);
the first portions (2p1a, 2p2a) of the first and second sides (2c1, 2c2) being separated by a distance (d2b) at least equal to the minimum distance (d2), the second portions (2p1b, 2p2b) of the first and second sides (2c1, 2c2) being separated by a distance equal to the minimum distance (d2);
said void (2) of said upright (1) being adapted to receive a panel (3) having a width (L3) at most equal to the length of the solid upright (1),
and a thickness (E3) measured normally to the width and less than the minimum distance (d2) between the first and second sides (2c1, 2c2) of the solid upright (1).

5. Kit according to Claim 4, also comprising at least one panel (3) having a width equal to the length of the solid upright (1), and a thickness measured normally to the width and less than the minimum distance (d2) between the first and second sides (2c1, 2c2) of the solid upright (1) .

6. Kit according to either one of Claims 4 and 5, the kit also comprising trim extrusions (9) having a length measured parallel to the bottom central axis (Z) or, preferably, equal to the length of the solid upright (1) and a section normal to the central axis (Z) having a T shape, said trim extrusions (9) being able to be inserted into the cavities (2a1, 2a2) of the void (2) of a solid upright (1).

7. Method for assembling a cabinet mounting kit comprising the following steps:
a. provision of a cabinet mounting kit according to Claim 4;
b. optional insertion of a punch (8) into the void (2) of the link element (6) according to Claim 3;
c. insertion of the circular portion (6c) of a link element (6) into one of the cavities (2a1, 2a2) of the void (2) of a solid upright (1) by one of the ends of the solid upright (1) and parallel to the central axis (Z) of the solid upright (1);
the steps b and c being able to be repeated.

8. Assembly method according to Claim 7, in which the cabinet mounting kit is a kit according to Claim 5 and comprising at least one of the following additional steps:
a. fixing of a panel (3) to the fixing portion of the link element (6);
b. insertion of a panel (3) into the void (2) of a solid upright (1) by one of the ends of the solid upright (1) and parallel to the central axis (Z) of the solid upright (1);
the steps being able to be repeated.

9. Assembly method according to either one of Claims 7 and 8, in which the cabinet mounting kit is a kit according to Claim 6 and comprising the following additional step: insertion of a trim extrusion into the cavities (2a1, 2a2) and the void (2) of a solid upright (1) by one of the ends of the solid upright (1) and parallel to the central axis of the solid upright (1); the step being able to be repeated.
